# EUROPÄISCHE PATENTSCHRIFT

(11) **EP 4 030 918 B1**
(45) Veröffentlichungstag und Bekanntmachung des Hinweises auf die Patenterteilung: **09.08.2023**
(21) Anmeldenummer: 20797544.2
(22) Anmeldetag: 09.09.2020
(51) Int. Cl.: A22C 17/00, A22C 21/00, B02C 18/30

(54) **ZERKLEINERUNGSTROMMEL FÜR EINE SCHNEID- UND SEPARIERVORRICHTUNG**
COMMINUTING BARREL FOR A CUTTING AND SEPARATING APPARATUS
TAMBOUR DE BROYAGE POUR UN DISPOSITIF DE COUPE ET DE SÉPARATION

(30) Priorität: 18.09.2019 DE 102019006557
(43) Veröffentlichungstag der Anmeldung: 27.07.2022
(73) Patentinhaber: SEPAgrind GmbH, 51491 Overath (DE)
(72) Erfinder: VON DER WEIDEN, Helmut, 67824 Feilbingert (DE)
(74) Vertreter: Straubel, Dirk
(86) Internationale Anmeldenummer: PCT/IB2020/058365
(87) Internationale Veröffentlichungsnummer: WO 2021/053464

(56) Entgegenhaltungen:
- CN-A- 105 454 393
- DE-A1-102017 003 406
- US-A- 5 597 352

## Beschreibung

Die Erfindung betrifft eine Zerkleinerungstrommel für eine Schneid- und Separiervorrichtung gemäß den im Oberbegriff des Anspruchs 1 stehenden Merkmalen. Die Erfindung ist außerdem an einer Schneid- und Separiervorrichtung verwirklicht.

Die Zerkleinerungstrommel enthaltene Schneid- und Separiervorrichtungen werden häufig in der Lebensmittelindustrie, insbesondere für die Zerkleinerung und Weiterverarbeitung von Fleisch eingesetzt. Bei der Verarbeitung von Fleisch beispielsweise zu Wurstwaren sind in der Lebensmittelindustrie insbesondere Magerfleischmuskelgruppen mit einem geringen Anteil von Kollagengewebe von Interesse. Das zu verarbeitende Fleisch ist jedoch üblicherweise zusätzlich mit Fettgewebe, kollagenem Gewebe und Sehnen durchsetzt, welches während der Zerkleinerung möglichst vollständig aussortiert und aus dem Verarbeitungszyklus entfernt werden soll.

Zum Entfernen dieser unerwünschten Bestandteile dienen beispielsweise Schneid- und Separiervorrichtungen entsprechend der DE 10 2017 003 406 A1 aufweisend eine Zerkleinerungstrommel mit einer drehbar darin gelagerten Förderschnecke. Die Zerkleinerungstrommel weist eine Vielzahl radial ausgerichteter Schneidöffnungen auf. Zu verarbeitendes Lebensmittel wird über eine Eintrittsöffnung in die Zerkleinerungstrommel gefördert, in der weichere Anteile des zu verarbeitenden Lebensmittels aufgrund des von der Förderschnecke auf das Lebensmittel übertragenen Druckes in die Schneidöffnungen ausweichen, als Lebensmittelzapfen abgetrennt und durch die Schneidöffnungen aus der Zerkleinerungstrommel herausgedrückt werden.

Hierbei handelt es sich um den für die Weiterverarbeitung gewünschten Lebensmittelbestandteil. Sehniges Material sowie nicht verwertbare Feststoffe nehmen nicht am Zerkleinerungsprozess teil und verlassen die Zerkleinerungstrommel durch eine am Ende angeordnete Austrittsöffnung. Es hat sich jedoch gezeigt, dass ein großer Anteil des zu verarbeitenden Lebensmittels nicht durch einen Trennschnitt sondern durch Quetschung zerkleinert wird, wodurch die Schneidleistung der Schneid- und Separiervorrichtung sowie die Qualität des gewünschten Lebensmittelbestandteils beeinträchtigt sind.

Die der Erfindung zugrunde liegende Aufgabe bestand folglich darin, eine Zerkleinerungstrommel derart zu verbessern, dass die Schneidleistung der Schneid- und Separiervorrichtung sowie die Qualität des gewünschten Lebensmittelbestandteils signifikant verbessert sind.

Die Aufgabe wird erfindungsgemäß mit den Merkmalen des Anspruchs 1 gelöst. Die Schneidöffnungen treten an der Innenwand der Zerkleinerungstrommel aus und verrichten bei Betrieb der Schneid- und Separiervorrichtung den überwiegenden Teil der Schneidarbeit an dem zu verarbeitenden Lebensmittel.

Der zwischen schneidender und einziehender Öffnungskante angeordnete Zuführkanal ist unterhalb des Niveaus der Innenwand der Zerkleinerungstrommel angeordnet. Der Zuführkanal ist stets zum Inneren des Druckgehäuseabschnittes offen. Vorzugsweise ist der Zuführkanal als eine bezüglich der Innenwand konkave Ausnehmung ausgeformt, die insbesondere eine gerundete oder eckige Querschnittskontur aufweist. Zu zerkleinerndes Lebensmittel gelangt während des Betriebs der Schneid- und Separiervorrichtung in Förderrichtung zunächst über die einziehende Öffnungskante in den Zuführkanal. Hierdurch befindet sich das zu zerkleinernde Lebensmittel in einem Niveau unterhalb der schneidenden Öffnungskante, so dass erst bei einer vollständigen Füllung der Schneidöffnung und Ausbildung eines darin befindlichen Lebensmittelzapfens überschüssiges Lebensmittel über die schneidende Öffnungskante gefördert, vom Fleischzapfen abgetrennt und einer der nachfolgenden Schneidöffnungen zugeführt wird.

Für ein hochwertiges Schnittbild des gewünschten Lebensmittels und eine hohe Schneidleistung ist es unerlässlich, dass das zu zerkleinernde Lebensmittel an der Innenwand gegen eine von der Förderschnecke übertragene Rotationsbewegung abgestützt und die Rotationsbewegung in eine möglichst geradlinige Vorwärtsbewegung in Richtung der Austrittsöffnung umgewandelt wird. Die abgesenkten Zuführkanäle ermöglichen eine dauerhafte mechanische Abstützung und Vorwärtsbewegung des zu zerkleinernden Lebensmittels mit dem Ergebnis eines höheren Drucks innerhalb des zu zerkleinernden Lebensmittels und der Ausbildung längerer Fleischzapfen innerhalb der Schneidöffnungen.

Vorteilhafterweise ist der Zuführkanal achsparallel zu einer Trommellängsachse des Druckgehäuseabschnitts ausgerichtet. Hierdurch erfolgt eine besonders günstige Befüllung der Schneidöffnungen, da das zu zerkleinernde Lebensmittel eine möglichst axiale Vorschubbewegung in Richtung der Austrittsöffnung vollzieht, woraus ein besonders hoher Druck innerhalb des zu zerkleinernden Lebensmittels resultiert. Überdies trifft der Zuführkanal und somit auch das darin befindliche, zu zerkleinernde Lebensmittels zentrisch auf die schneidende Öffnungskante, so dass eine maximale Füllung der Schneidöffnung unterstützt wird und vor Erreichen einer vollständigen Füllung der Schneidöffnung mit Ausbildung eines entsprechenden Lebensmittelzapfens kaum zu zerkleinerndes Lebensmittels seitlich der jeweiligen Schneidöffnung entweicht.

Der Zuführkanal kann eine axiale Länge aufweisen, die 5 % bis 20 % des an der Innenwand ausgeformten Durchmessers der Schneidöffnungen entspricht. Ein derartiges Verhältnis zwischen Durchmesser der Schneidöffnungen und axialer Länge des Zuführkanals reicht für eine ausreichende Abstützung des zu zerkleinernden Lebensmittels gegen Mitdrehen mit der Förderschnecke aus. Andererseits gestattet die vorgeschlagene axiale Länge des Zuführkanals noch einen ausreichend engen Abstand der Schneidöffnungen in axialer Richtung und damit eine ausreichende Anzahl von Schneidöffnungen in dem Druckgehäuseabschnitt der Zerkleinerungstrommel. Die Anzahl der Schneidöffnungen ist ebenfalls maßgeblich für die Schneidleistung der Schneid- und Separiervorrichtung.

Es hat sich als besonders günstig erwiesen, wenn der Zuführkanal bezogen auf die Innenwand eine Tiefe zwischen 0,5 mm und 4,0 mm aufweist. Eine derartige Tiefe unterstützt in ausreichendem Maße eine Abstützung des zu zerkleinernden Lebensmittels. Eine geringere Tiefe des Zuführkanals vermag nicht für eine ausreichende Abstützung des zu zerkleinernden Lebensmittels zu sorgen, wohingegen ein noch tieferer Zuführkanal in Abhängigkeit der Beschaffenheit des zu zerkleinernden Lebensmittels keine ausreichende Füllung erhält. Überdies lassen sich noch tiefere Zuführkanäle schlechter reinigen.

Der Zuführkanal sollte in Umfangsrichtung eine maximale Breite aufweisen, die dem an der Innenwand ausgeformten Durchmesser der Schneidöffnungen entspricht. Auch hierdurch wird der Füllungsgrad der jeweiligen Schneidöffnung mit dem zu zerkleinernden Lebensmittel maximiert.

Sinnvollerweise ist der Zuführkanal von der einziehenden Öffnungskante in Richtung der schneidenden Öffnungskante konisch aufgeweitet. Dieses wird beispielsweise durch eine elliptisch ausgeformte einziehende Öffnungskante erreicht, deren maximaler Durchmesser in der Trommellängsachse ausgerichtet ist. Diese Formgebung lässt sich beispielweise durch eine einseitige Aufweitung der Schneidöffnung in Richtung der Eintrittsöffnung beispielsweise mittels eines schrägstehenden Fräskopfes erzielen.

Zweckmäßigerweise taucht der Zuführkanal ausgehend von einem Niveau der Innenwand in Richtung einer Lochachse der zugehörigen Schneidöffnung mittels einer Einlaufschräge schräg ab. Hieraus resultiert der Vorteil, dass das zu zerkleinernde Lebensmittel möglichst vollständig von der Innenwand in den Zuführkanal rutscht und von dort der Schneidöffnung zugeführt wird.

Vorzugsweise sind die Schneidöffnungen mit bezogen auf die Innenwand unter einem Winkel geneigten Lochachsen ausgerichtet. Aus den geneigten Lochachsen der Schneidöffnungen resultiert im Übergangsbereich von Schneidöffnung und Innenwand eine besonders scharfe, schneidende Öffnungskante mit einem Keilwinkel von unter 90°. Auf der gegenüberliegenden Seite der schneidenden Öffnungskante weist die Schneidöffnung dagegen eine einziehende Öffnungskante und den sich daran anschließenden Zuführkanal auf, in den das zu verarbeitende Lebensmittel hineinwandert, dadurch unter ein Niveau der schneidenden Öffnungskante gelangt und, solange die Schneidöffnung nicht mit einem Lebensmittelzapfen gefüllt ist, aufgrund der in axialer Richtung vorstehenden schneidenden Öffnungskante nicht über diese hinwegwandern kann. Aufgrund der Kombination aus vertieftem Zuführkanal und geneigter Lochachse erfolgt eine annähernd vollständige Füllung der jeweiligen Schneidöffnung. Lediglich überschüssiges, zu verarbeitendes Lebensmittel, das nicht mehr in die bereits gefüllte Schneidöffnung passt, wandert über die schneidende Öffnungskante hinweg und wird im Inneren der Zerkleinerungstrommel bis zu einer der weiteren Schneidöffnungen weitergefördert.

Vorteilhafterweise ist der Winkel der geneigten Lochachse auf der zur Eintrittsöffnung der Zerkleinerungstrommel abgewandten Seite der Schneidöffnung zwischen deren Lochachse und der Innenwand angeordnet. Unter diesem Winkel ist die Lochachse in Richtung der Eintrittsöffnung der Zerkleinerungstrommel geneigt. In axialer Richtung der Zerkleinerungstrommel fluchtet zweckmäßigerweise dessen Radius mit der Lochachse oder, in anderen Worten, die Lochachse schneidet in radialer Richtung die durch den Druckgehäuseabschnitt verlaufende Trommellängsachse. Jede Schneidöffnung kann daher mit der Innenwand des Druckgehäuseabschnittes eine der Austrittsöffnung zugewandte schneidende Öffnungskante und eine der Eintrittsöffnung zugewandte einziehende Öffnungskante aufweisen.

Da das zu verarbeitende Lebensmittel von der Eintrittsöffnung im Wesentlichen axial durch die Zerkleinerungstrommel in Richtung der Austrittsöffnung vorgeschoben wird, ist die schneidende Öffnungskante auf der zur Eintrittsöffnung der Zerkleinerungstrommel abgewandten Seite der Schneidöffnung ausgebildet und steht somit der Hauptbewegungsrichtung des zu verarbeitenden Lebensmittels entgegen. Hieraus resultiert ein besonders sauberer Trennschnitt ohne nennenswerte Quetschung des zu verarbeitenden Lebensmittels.

Vorzugsweise beträgt der Winkel der Lochachsen zwischen 60° und 88°, besonders bevorzugt 65° bis 85°, ganz besonders bevorzugt 70 bis 80°. Je kleiner der Winkel ist, desto schärfer ist die daraus gebildete schneidende Öffnungskante, woraus eine besonders hohe Schneidleistung bei hoher Qualität des für die Weiterverarbeitung gewünschten Lebensmittelbestandteils resultiert. Mit einem kleineren Winkel sinkt jedoch auch die verschleißbedingte Standzeit der Zerkleinerungstrommel.

Sinnvollerweise sind die Lochachsen derart ausgerichtet, dass die schneidende Öffnungskante zwischen der Innenwand und der Lochachse mit dem Winkel ausgebildet ist. Der Keilwinkel der schneidenden Öffnungskante entspricht dem Winkel der zugehörigen Lochachse.

In axialer Richtung und/oder in Umfangsrichtung können Öffnungskanten benachbarter Schneidöffnungen überlappend zueinander ausgerichtet sein. Hierdurch wird vermieden, dass es zu einer Stegbildung kommt und ein Teil des zu verarbeitenden Lebensmittels ohne Kontakt mit einer Schneidöffnung durch den Druckgehäuseabschnitt hindurchgefördert wird. Günstigerweise sind in axialer Richtung hintereinander angeordnete Schneidöffnungen in Umfangsrichtung mit einem Versatzwinkel von 3° bis 9°, besonders bevorzugt 4° bis 8°, ganz besonders bevorzugt 5° bis 7°, versetzt zueinander ausgerichtet.

Die Erfindung ist auch an einer Schneid- und Separiervorrichtung mit der erfindungsgemäßen Zerkleinerungstrommel verwirklicht, wobei in der Zerkleinerungstrommel drehbar eine Förderschnecke gelagert ist, umfassend eine Schneckenwelle mit mindestens einem spiralförmig daran angeformten Schneckengang, welcher in Einbaulage eine Vorderflanke zum schiebenden Transport eines Lebensmittels, eine auf der gegenüberliegenden Seite angeordnete Rückflanke sowie an seinem distalen Ende zwischen der Vorderflanke und der Rückflanke einen zylindrischen Abschnitt aufweist, der im Übergangsbereich zu der Vorderflanke des Schneckenganges mit einer geschärften Schneidkante ausgeformt ist.

Die Schneckenwelle und der Schneckengang sind vorzugsweise als einstückig integrale Baueinheit konzipiert, um dauerhaft die zu erwartenden betrieblichen Kräfte übertragen zu können. Die geschärfte Schneidkante dient insbesondere dazu, etwaige Anhaftungen auf der Innenwand des Druckgehäuseabschnittes zu entfernen, da andernfalls beispielsweise kollagene Fleischbestandteile die Schneidöffnungen überdecken und kein zu verarbeitendes Lebensmittel mehr in die Schneidöffnungen sowie den Zuführkanal hineingedrückt und zerkleinert wird. Aufgrund der geschärften Schneidkante wird die Schneidleistung der Schneid- und Separiervorrichtung noch weiter erhöht.

Vorzugsweise ist die geschärfte Schneidkante an einem die Schneidöffnungen überstreichenden Abschnitt der Förderschnecke ausgebildet. Nur in diesem Bereich erfolgt eine Zerkleinerung des zu verarbeitenden Lebensmittels mit dem Risiko einer Überdeckung der Schneidöffnungen. Ein Zuführabschnitt der Förderschnecke, welcher aufströmig zwischen dem Druckgehäuseabschnitt mit den darin eingebrachten Schneidöffnungen und der Eintrittsöffnung der Zerkleinerungstrommel angeordnet sein kann, benötigt keine geschärfte Schneidkante. Hierdurch lassen sich die Fertigungskosten der Förderschnecke erheblich senken, da die geschärfte Schneidkante nur abschnittsweise an der Förderschnecke auszuformen ist.

Der zylindrische Abschnitt des Schneckenganges kann eine Breite aufweisen, die mindestens dem Durchmesser der Schneidöffnungen an der Innenwand entspricht. Der Schneckengang erhält bei dieser Dimensionierung und den zu erwartenden betrieblichen Lasten eine ausreichende Festigkeit ohne reversible Verformung. Darüber hinaus wird die Schneidleistung und -qualität günstig beeinflusst, da der in der Schneidöffnung gehaltene Fleischzapfen vollständig von dem im Druckgehäuseabschnitt befindlichen, zu verarbeitenden Lebensmittel gelöst wird.

Es hat sich als besonders günstig herausgestellt, wenn die geschärfte Schneidkante mit einem zwischen der Vorderflanke und einer rechtwinklig zur Schneckenwelle ausgerichteten Bearbeitungsebene angeordneten positiven Spanwinkel ausgebildet ist. Der positive Spanwinkel hintergreift und entfernt besonders effektiv Anhaftungen von zu verarbeitendem Lebensmittel, welche in den Wirkbereich der Förderschnecke gelangen.

Vorzugsweise beträgt der Spanwinkel zwischen 10° und 50°, besonders bevorzugt 20° und 40°, ganz besonders bevorzugt zwischen 25° und 35°.

Vorteilhafterweise ist zwischen der Vorderflanke und dem zylindrischen Abschnitt ein Keilwinkel von 40° bis 80°, besonders bevorzugt von 50° bis 70°, ganz besonders bevorzugt von 55° bis 65° ausgebildet.

Gemäß einer besonders zweckmäßigen Ausführungsform ist an einem distalen Ende der Vorderflanke eine Nut eingebracht, deren außenliegende Kontur den zylindrischen Abschnitt schneidet. Die außenliegende Kontur der Nut bildet bei dieser Ausführungsform den relevanten Abschnitt der Vorderflanke des Schneckenganges. In diesem Fall ist der Spanwinkel zwischen der außenliegenden Kontur der Nut und der Bearbeitungsebene angeordnet. Der Keilwinkel erstreckt sich dann zwischen der außenliegenden Kontur der Nut und dem zylindrischen Abschnitt des Schneckenganges.

Sinnvollerweise ist zwischen dem zylindrischen Abschnitt und der Rückflanke ein Radius oder eine Fase angeordnet. Eine derartige Materialreduktion vermindert den Temperaturanstieg in dem zu verarbeitenden Lebensmittel und senkt hierdurch die bakterielle Belastung.

Zum besseren Verständnis wird die Erfindung nachfolgend anhand von drei Figuren näher erläutert. Es zeigen die
- **Fig. 1:**: einen Längsschnitt durch die erfindungsgemäße Zerkleinerungstrommel;
- **Fig. 2:**: einen vergrößerten Längsschnitt durch ein Detail von Fig. 1 und
- **Fig. 3:**: einen Längsschnitt durch eine konzentrisch in die Zerkleinerungstrommel einsetzbare Förderschnecke.

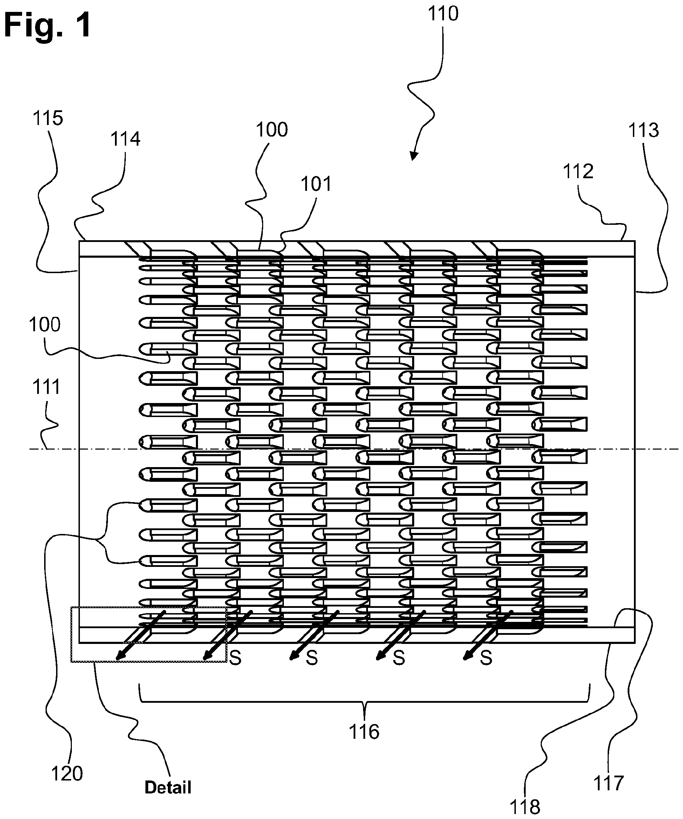

Die Fig. 1 zeigt einen Längsschnitt durch eine Zerkleinerungstrommel 110 aufweisend einen zylindrischen Querschnitt, wobei an deren ersten Endabschnitt 112 eine Eintrittsöffnung 113 ausgebildet ist, durch welche das zu zerkleinernde Lebensmittel der Zerkleinerungstrommel 110 zugeführt wird. Am gegenüberliegenden Ende der Zerkleinerungstrommel 110 befindet sich ein zweiter Endabschnitt 114, an dem eine Austrittsöffnung 115 ausgeformt ist, durch welche sehniges Material sowie nicht verwertbare Feststoffe aus der Zerkleinerungstrommel 110 herausgefördert werden. Die Eintrittsöffnung 113 und die Austrittsöffnung 115 bilden jeweils endseitig gegenüberliegende, axiale Öffnungen der Zerkleinerungstrommel 110.

Die Zerkleinerungstrommel 110 weist einen Druckgehäuseabschnitt 116 mit einer Vielzahl von Schneidöffnungen 120 auf, welche durchgängig von einer Innenwand 117 des Druckgehäuseabschnittes 116 bis zu einer Außenwand 118 verlaufen. Durch die Schneidöffnungen 120 entweicht der für die Weiterverarbeitung gewünschte Lebensmittelbestandteil, welches den exemplarisch mittels Pfeilen angedeuteten Schneidaustragsweg S nimmt.

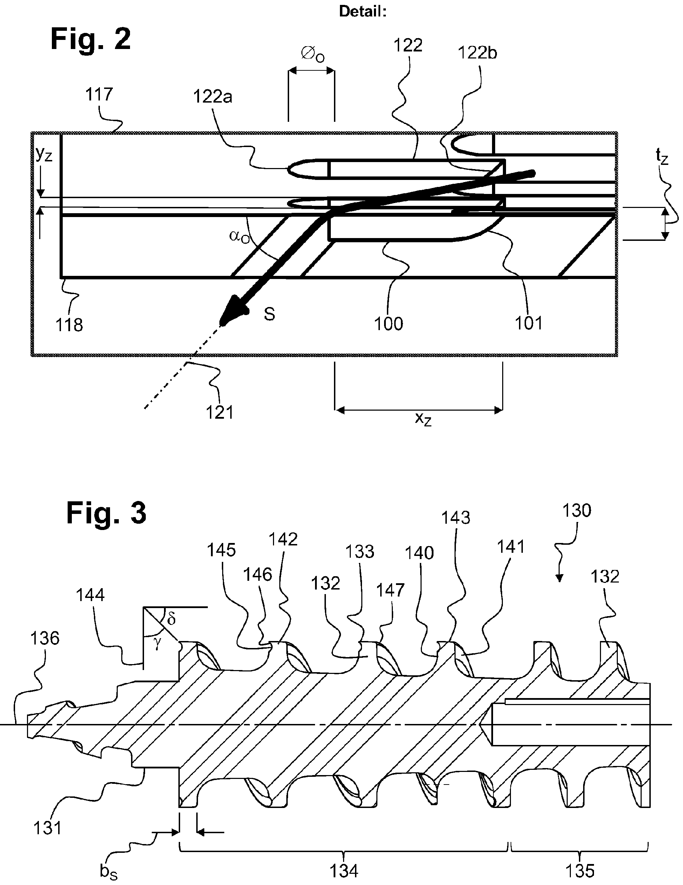

Eine Vergrößerung des in Fig. 1 markierten Details betreffend die Schneidöffnungen 120 zeigt die Fig. 2. Die Schneidöffnungen 120 verlaufen nicht in radialer Richtung durch den Druckgehäuseabschnitt 116, sondern sind mit ihrer Lochachse 121 geneigt angeordnet. Die Neigung der Lochachse 121 ist derart gewählt, dass diese an der Innenwand 117 der Eintrittsöffnung 113 zugewandt ist.

An der Zerkleinerungsarbeit des zu verarbeitenden Lebensmittels ist jedoch lediglich der im Bereich der Innenwand 117 angeordnete Durchmesser ∅_{O} der Schneidöffnungen 120 beteiligt. Die Lochachse 121 ist unter einem Winkel α_{O} geneigt. Der Winkel α_{O} ist auf der Seite der Austrittsöffnung 115 zwischen der Lochachse 121 und der Innenwand 117 beziehungsweise einer Trommellängsachse 111 der Zerkleinerungstrommel 110 angetragen.

Jede Schneidöffnung 120 verfügt im Übergangsbereich zu der Innenwand 117 des Druckgehäuseabschnittes 116 über eine umlaufende Öffnungskante 122, von der jedoch ein der Austrittsöffnung 115 zugewandter Teil als schneidende Öffnungskante 122a und ein der Eintrittsöffnung 113 zugewandter Teil als einziehende Öffnungskante 122b für das zu zerkleinernde Lebensmittel dient. Aus der Neigung der Lochachse 121 unter dem Winkel ao resultiert eine besonders scharfe schneidende Öffnungskante 122a unter demselben spitzen Winkel α_{O}.

Von der Schneidöffnung 120 erstreckt sich in Richtung der Eintrittsöffnung 113 ein Zuführkanal 100, welcher den Eintritt des zu zerkleinernden Lebensmittels in die jeweilige Schneidöffnung 120 begünstigt.

Der Zuführkanal 100 weist eine maximale Tiefe tz auf, die mindestens im Übergangsbereich zu der jeweiligen Schneidöffnung 120 ausgebildet ist. Ausgehend von der Schneidöffnung 100 ist der gesamte Zuführkanal 100 oder, entsprechend dem Ausführungsbeispiel von Fig. 1 und Fig. 2, zumindest ein der einziehenden Öffnungskante 122b zugewandter Abschnitt des Zuführkanals 100 mit einer Einlaufschräge 101 ausgeformt, welche einen Eintrag des zu zerkleinernden Lebensmittels in den Zuführkanal 100 unterstützt.

Eine Breite yz des Zuführkanals 100 entspricht dem Durchmesser ∅_{O} der zugehörigen Schneidöffnung 120, auch wenn die Darstellung der Fig. 2 im Längsschnitt einen anderen Eindruck erweckt. Der Zuführkanal 100 erstreckt sich mit seiner axialen Länge xz von der Schneidöffnung 120 bis zu der einziehenden Öffnungskante 122b, welche den Übergangsbereich von dem Zuführkanal 100 zu der Innenwand 117 seitens der Eintrittsöffnung 113 markiert.

Die Fig. 3 stellt eine Förderschnecke 130 in einem Längsschnitt dar, die in betriebsbereitem Zustand koaxial in die Zerkleinerungstrommel 110 eingesetzt ist. Die Förderschnecke 130 umfasst eine drehbar angetriebene Schneckenwelle 131, deren Förderschneckenlängsachse 136 mit der Trommellängsachse 111 der Zerkleinerungstrommel 110 fluchtet. An der Schneckenwelle 131 ist mindestens ein in axialer Richtung die Schneckenwelle 131 spiralförmig umgebender Schneckengang 132 ausgebildet, welcher bei einer Rotation der Schneckenwelle 131 aufgrund seiner Steigung in der Zerkleinerungstrommel 110 befindliches Lebensmittel von der Eintrittsöffnung 113 in Richtung der Austrittsöffnung 115 vorschiebt.

Dabei baut sich innerhalb des zu verarbeitenden Lebensmittels ein Druck auf, der das zu verarbeitende Lebensmittel in den Zuführkanal 100 und die Schneidöffnungen 120 schiebt, so dass sich innerhalb der Schneidöffnung 120 ein Lebensmittelzapfen ausbildet. Aufgrund der von der Förderschnecke 130 aufgebrachten, kontinuierlichen Vorschubbewegung des zu verarbeitenden Lebensmittels, reißt der Lebensmittelzapfen von dem in dem Druckgehäuseabschnitt 116 verbleibenden Lebensmittel ab und dringt durch die Schneidöffnung 120 aus der Zerkleinerungstrommel 110 nach außen.

Der Schneckengang 132 weist eine Vorderflanke 140 sowie eine Rückflanke 141 auf. Zwischen der Vorderflanke 140 und der Rückflanke 141 ist an jedem distalen Ende 142 des Schneckenganges 132 ein zylindrischer Abschnitt 143 zu erkennen, welcher komplementär zu der Innenwand 117 des Druckgehäuseabschnittes 116 ausgeformt ist.

Der Schneckengang 132 ist jedoch lediglich im Bereich des Druckgehäuseabschnitts 116, das heißt in einem die Schneidöffnungen 120 überstreichenden Abschnitt 134 der Förderschnecke 130, an seinem außenliegenden Ende mit einer geschärften Schneidkante 133 ausgebildet.

Die geschärfte Schneidkante 133 umfasst eine auf in der Vorderflanke 140 eingefügte Nut 145, deren außenliegende Kontur 146 an den zylindrischen Abschnitt 143 angrenzt und in diesen übergeht. Die Nut 145 ist über den axialen Verlauf der Förderschnecke 130 äquidistant zu dem zylindrischen Abschnitt 143 ausgebildet und erstreckt sich über den gesamten, die Schneidöffnungen 120 überstreichenden Abschnitt 134.

Mit Hilfe der geschärften Schneidkante 133 lassen sich insbesondere Anhaftungen des zu verarbeitenden Lebensmittels an der Innenwand 117 des Druckgehäuseabschnittes 116 der Zerkleinerungstrommel 110 abschälen, so dass sich diese nicht dauerhaft über die Schneidöffnungen 120 legen und dadurch einen Eintritt des zu verarbeitenden Lebensmittels in die Schneidöffnungen 120 verhindern. Üblicherweise bestehen derartige Anhaftungen aus kollagenem Material, welches eine bis zu zwanzigfache Festigkeit gegenüber Magerfleisch hat und aufgrund seiner hohen Festigkeit kaum in die Schneidöffnungen 120 eindringt. Von der geschärften Schneidkante 133 abgeschälte Anhaftungen werden in Richtung der Austrittsöffnung 115 transportiert und dort entfernt.

Die geschärfte Schneidkante 133 ist aus der außenliegenden Kontur 146 der Nut 145 und dem zylindrischen Abschnitt 143 gebildet. Die geschärfte Schneidkante 133 weist einen Spanwinkel y auf, der zwischen einer senkrecht zur axialen Erstreckung der Förderschnecke 130 stehenden Bearbeitungsebene 144 und der außenliegenden Kontur 146 der Nut 145 aufgespannt ist. Ein Keilwinkel δ ist zwischen der außenliegenden Kontur 146 der Nut 145 und dem zylindrischen Abschnitt 143 des Schneckenganges 132 angeordnet. Da aufgrund der zylindrischen Abschnittes 143 des Schneckenganges 132 der Freiwinkel stets 0° ist, betragen die Summe von Spanwinkel y und Keilwinkel δ stets 90°.

Die geschärfte Schneidkante 133 ist lediglich in dem die Schneidöffnungen 120 überstreichenden Abschnitt 134 vorhanden. In einem Zuführabschnitt 135 der Förderschnecke 130, der die Zerkleinerungstrommel 110 zwischen dem Druckgehäuseabschnitt 116 mit den Schneidöffnungen 120 und der Eintrittsöffnung 113 überragt, weist diese lediglich einen konventionellen Schneckengang 132 auf, dessen Schneidkante beispielsweise mit einem Spanwinkel y von 90° ausgebildet sein kann. Da in diesem Bereich keine Schneidöffnungen 120 in der Zerkleinerungstrommel 110 vorhanden sind, werden diese auch nicht durch Anhaftungen des zu verarbeitenden Lebensmittels zugesetzt und brauchen infolgedessen auch nicht von der geschärften Schneidkante 133 der Förderschnecke 130 entfernt zu werden.

Für eine hohe Schneidleistung der Schneid- und Separiervorrichtung 100 weist der Schneckengang 132 im Bereich des die Schneidöffnungen 120 überstreichenden Abschnittes 134 eine Breite bs auf, die mindestens dem Durchmesser ∅_{O} der Schneidöffnungen 120 an der Innenwand 117 des Druckgehäuseabschnittes 116 entspricht. Die Breite bs bildet den senkrechten Abstand zwischen Vorderflanke 140 und Rückflanke 141 des Schneckenganges 132.

Im Übergangsbereich zwischen zylindrischem Abschnitt 143 des Schneckenganges 132 und der zugehörigen Rückflanke 141 ist eine Fase 147 ausgebildet, die ebenfalls dazu beiträgt, eine Erwärmung des zu verarbeitenden Lebensmittels zu verringern. Anstelle einer Fase kann auch ein Radius oder eine andere geometrische Form im Übergangsbereich von zylindrischem Abschnitt 143 und Rückflanke 141 vorgesehen sein; wesentlich ist stets, dass eine Materialreduktion des Schneckenganges 132 in diesem Bereich vorhanden ist. Die Fase 147 verläuft entsprechend der Nut 145 ausschließlich in dem die Schneidöffnungen 120 überstreichenden Abschnitt 134 der Förderschnecke 130.

### Bezugszeichenliste

- 100: Zuführkanal
- 101: Einlaufschräge Zuführkanal

- 110: Zerkleinerungstrommel
- 111: Trommellängsachse
- 112: erster Endabschnitt Zerkleinerungstrommel
- 113: Eintrittsöffnung
- 114: zweiter Endabschnitt Zerkleinerungstrommel
- 115: Austrittsöffnung
- 116: Druckgehäuseabschnitt
- 117: Innenwand Druckgehäuseabschnitt
- 118: Außenwand Druckgehäuseabschnitt

- 120: Schneidöffnungen
- 121: Lochachse Schneidöffnungen
- 122: Öffnungskante
- 122a: schneidende Öffnungskante
- 122b: einziehende Öffnungskante

- 130: Förderschnecke
- 131: Schneckenwelle
- 132: Schneckengang
- 133: geschärfte Schneidkante
- 134: Schneidöffnungen überstreichender Abschnitt
- 135: Zuführabschnitt
- 136: Förderschneckenlängsachse

- 140: Vorderflanke Schneckengang
- 141: Rückflanke Schneckengang
- 142: distales Ende Schneckengang
- 143: zylindrischer Abschnitt Schneckengang
- 144: Bearbeitungsebene
- 145: Nut
- 146: außenliegende Kontur Nut
- 147: Fase

- bs: Breite Schneckengang
- S: Schneidaustragsweg
- tz: Tiefe Zuführkanal
- xz: axiale Länge Zuführkanal
- y_{Z}: Breite Zuführkanal

- α_{O}: Winkel Lochachse Schneidöffnungen
- ∅_{O}: Durchmesser Schneidöffnungen
- y: Spanwinkel Schneidkante
- δ: Keilwinkel Schneidkante

## Patentansprüche

1. Zerkleinerungstrommel (110) für eine Schneid- und Separiervorrichtung, an deren ersten Endabschnitt (112) eine Eintrittsöffnung (113) und an deren zweiten Endabschnitt (114) eine Austrittsöffnung (115) ausgebildet ist, wobei in einem Druckgehäuseabschnitt (116) der Zerkleinerungstrommel (110) eine Vielzahl von Schneidöffnungen (120) angeordnet sind, welche den Druckgehäuseabschnitt (116) von einer Innenwand (117) zu einer Außenwand (118) durchgängig durchsetzen, wobei jede Schneidöffnung (120) an der Innenwand (117) eine der Austrittsöffnung (115) zugewandte schneidende Öffnungskante (122a) und eine der Eintrittsöffnung (113) zugewandte einziehende Öffnungskante (122b) aufweist,
**dadurch gekennzeichnet,**
**dass** zwischen der schneidenden Öffnungskante (122a) und der einziehenden Öffnungskante (122b) ein bezüglich der Innenwand (117) abgesenkter Zuführkanal (100) angeordnet ist.

2. Zerkleinerungstrommel (110) nach Anspruch 1, **dadurch gekennzeichnet, dass** der Zuführkanal (100) achsparallel zu einer Trommellängsachse (111) des Druckgehäuseabschnitts (116) ausgerichtet ist.

3. Zerkleinerungstrommel (110) nach Anspruch 1 oder 2, **dadurch gekennzeichnet, dass** der Zuführkanal (100) eine axiale Länge (xz) aufweist, die 5 % bis 20 % des an der Innenwand (117) ausgeformten Durchmessers (Os) der Schneidöffnungen (120) entspricht.

4. Zerkleinerungstrommel (110) nach einem der Ansprüche 1 bis 3,
**dadurch gekennzeichnet, dass** der Zuführkanal (100) bezogen auf die Innenwand (117) eine Tiefe (tz) zwischen 0,5 mm und 4,0 mm aufweist.

5. Zerkleinerungstrommel (110) nach einem der Ansprüche 1 bis 4, **dadurch gekennzeichnet, dass** der Zuführkanal (100) in Umfangsrichtung eine maximale Breite (yz) aufweist, die dem an der Innenwand (117) ausgeformten Durchmesser (∅_{O}) der Schneidöffnungen (120) entspricht.

6. Zerkleinerungstrommel (110) nach einem der Ansprüche 1 bis 5, **dadurch gekennzeichnet, dass** der Zuführkanal (100) von der schneidenden Öffnungskante (122a) in Richtung der einziehenden Öffnungskante (122b) konisch aufgeweitet ist.

7. Zerkleinerungstrommel (110) nach einem der Ansprüche 1 bis 6, **dadurch gekennzeichnet, dass** der Zuführkanal (100) ausgehend von einem Niveau der Innenwand (117) in Richtung einer Lochachse (121) der zugehörigen Schneidöffnung (120) mittels einer Einlaufschräge (101) schräg abtaucht.

8. Zerkleinerungstrommel (110) nach einem der Ansprüche 1 bis 7, **dadurch gekennzeichnet, dass** die Schneidöffnungen (120) mit bezogen auf die Innenwand (117) unter einem Winkel (α) geneigten Lochachsen (121) ausgerichtet sind.

9. Zerkleinerungstrommel (110) nach Anspruch 8, **dadurch gekennzeichnet, dass** der Winkel (α) zwischen 60° und 88°, besonders bevorzugt 65° bis 85°, ganz besonders bevorzugt 70 bis 80° beträgt.

10. Zerkleinerungstrommel (110) nach Anspruch 8 oder 9, **dadurch gekennzeichnet, dass** der Winkel (α) auf der zur Eintrittsöffnung (113) abgewandten Seite der Schneidöffnung (120) zwischen deren Lochachse (121) und der Innenwand (117) angeordnet ist.

11. Zerkleinerungstrommel (110) nach einem der Ansprüche 8 bis 10, **dadurch gekennzeichnet, dass** die Lochachse (121) in radialer Richtung die durch den Druckgehäuseabschnitt (116) verlaufende Trommellängsachse (111) schneidet.

12. Zerkleinerungstrommel (110) nach einem der Ansprüche 8 bis 11, **dadurch gekennzeichnet, dass** die Lochachsen (121) derart ausgerichtet sind, dass die schneidende Öffnungskante (122a) mit dem Winkel (α) ausgebildet ist.

13. Zerkleinerungstrommel (110) nach einem der Ansprüche 1 bis 12, **dadurch gekennzeichnet, dass** in axialer Richtung und/oder in Umfangsrichtung Öffnungskanten (122, 122a, 122b) benachbarter Schneidöffnungen (120) überlappend zueinander ausgerichtet sind.

14. Schneid- und Separiervorrichtung mit einer Zerkleinerungstrommel (110) nach einem der Ansprüche 1 bis 13, **dadurch gekennzeichnet, dass** in der Zerkleinerungstrommel (110) drehbar eine Förderschnecke (130) gelagert ist, umfassend eine Schneckenwelle (131) mit mindestens einem spiralförmig daran angeformten Schneckengang (132), welcher in Einbaulage eine Vorderflanke (140) zum schiebenden Transport eines Lebensmittels, eine auf der gegenüberliegenden Seite angeordnete Rückflanke (141) sowie an seinem distalen Ende (142) zwischen der Vorderflanke (140) und der Rückflanke (141) einen zylindrischen Abschnitt (143) aufweist, der im Übergangsbereich zu der Vorderflanke (140) des Schneckenganges (132) mit einer geschärften Schneidkante (133) ausgeformt ist.

15. Schneid- und Separiervorrichtung nach Anspruch 14, **dadurch gekennzeichnet, dass** die geschärfte Schneidkante (133) an einem die Schneidöffnungen (120) überstreichenden Abschnitt (134) der Förderschnecke (130) ausgebildet ist.

16. Schneid- und Separiervorrichtung nach Anspruch 14 oder 15, **dadurch gekennzeichnet, dass** der zylindrische Abschnitt (143) des Schneckenganges (132) eine Breite (bs) aufweist, die mindestens dem Durchmesser (∅_{O}) der Schneidöffnungen (120) an der Innenwand (117) entspricht.

17. Schneid- und Separiervorrichtung nach einem der Ansprüche 14 bis 16, **dadurch gekennzeichnet, dass** die geschärfte Schneidkante (133) mit einem zwischen der Vorderflanke (140) und einer rechtwinklig zur Schneckenwelle (131) ausgerichteten Bearbeitungsebene (144) angeordneten positiven Spanwinkel (γ) ausgebildet ist.

18. Schneid- und Separiervorrichtung nach einem der Ansprüche 14 bis 17, **dadurch gekennzeichnet, dass** an dem distalen Ende (142) der Vorderflanke (140) eine Nut (145) eingebracht ist, deren außenliegende Kontur (146) den zylindrischen Abschnitt (143) schneidet.

19. Schneid- und Separiervorrichtung nach einem der Ansprüche 14 bis 18, **dadurch gekennzeichnet, dass** zwischen dem zylindrischen Abschnitt (143) und der Rückflanke (141) ein Radius oder eine Fase (147) angeordnet ist.

## Claims

1. A mincing drum (110) for a cutting and separating device, at the first end section (112) of which there is an inlet opening (113) and at the second end section (114) of which there is an outlet opening (115), a plurality of cutting openings (120) being arranged in a pressure housing section (116) of the mincing drum (110) and passing continuously through the pressure housing section (116) from an inner wall (117) to an outer wall (118), each cutting opening (120) having, on the inner wall (117), a cutting opening edge (122a) facing the outlet opening (115) and a drawing-in opening edge (122b) facing the inlet opening (113),
**characterized in that,**
a feed channel (100) which is recessed relative to the inner wall (117) is situated between the cutting opening edge (122a) and the drawing-in opening edge (122b).

2. The mincing drum (110) according to claim 1,
**characterized in that** the feed channel (100) is aligned axially parallel to a longitudinal axis (111) of the pressure housing section (116).

3. The mincing drum (110) according to claim 1 or 2, **characterized in that** the feed channel (100) has an axial length (x_{Z}) that corresponds to 5% to 20% of a diameter (∅_{O}) of the cutting openings (120) formed on the inner wall (117).

4. The mincing drum (110) according to one of claims 1 to 3, **characterized in that** the feed channel (100) has a depth (tz) of between 0.5 mm and 4.0 mm in relation to the inner wall (117).

5. The mincing drum (110) according to one of claims 1 to 4, **characterized in that** the feed channel (100) has a maximum width (y_{Z}) in the circumferential direction which corresponds to a diameter (∅_{O}) of the cutting openings (120).

6. The mincing drum (110) according to one of claims 1 to 5, **characterized in that** the feed channel (100) is widened conically from the cutting opening edge (122a) in the direction of the drawing-in opening edge (122b).

7. The mincing drum (110) according to one of claims 1 to 6, **characterized in that** the feed channel (100) descends obliquely by means of an inlet incline (101), starting from a level of the inner wall (117) in the direction of an axis (121) of the associated cutting opening (120).

8. The mincing drum (110) according to one of claims 1 to 7, **characterized in that** the cutting openings (120) are aligned with axes (121) inclined at an angle (ao) relative to the inner wall (117).

9. The mincing drum (110) according to claim 8, **characterized in that** the angle (ao) is between 60° and 88°, particularly preferably 65° to 85°, very particularly preferably 70 to 80°.

10. The mincing drum (110) according to claim 8 or 9, **characterized in that** the angle (ao) is arranged on the side of the cutting opening (120) facing away from the inlet opening (113) between its axis (121) and the inner wall (117).

11. The mincing drum (110) according to one of claims 8 to 10, **characterized in that** the cutting opening axis (121) intersects in the radial direction the longitudinal drum axis (111) running through the pressure housing section (116).

12. The mincing drum (110) according to one of claims 8 to 11, **characterized in that** the cutting opening axes (121) are aligned in such a way that the cutting opening edge (122a) is formed with the angle (α).

13. The mincing drum (110) according to one of claims 1 to 12, **characterized in that** opening edges (122, 122a, 122b) of adjacent cutting openings (120) are aligned to overlap one another in the axial direction and/or in the circumferential direction.

14. A cutting and separating device with a mincing drum (110) according to one of claims 1 to 13, **characterized in that** a conveying screw (130) is rotatably mounted in the mincing drum (110), comprising a screw shaft (131) with at least a screw flight (132) spirally formed thereon, which in the installed position has a front flank (140) for the pushing transport of a foodstuff, a rear flank (141) arranged on the opposite side and at its distal end (142) between the front flank (140) and the rear flank (141) a cylindrical portion (143) which is formed with a sharpened cutting edge (133) in the transition area to the front flank (140) of the screw flight (132).

15. The cutting and separating device according to claim 14, **characterized in that** the sharpened cutting edge (133) is formed on a sweeping section (134) of the conveying screw (130) which sweeps over the cutting openings (120).

16. The cutting and separating device according to claim 14 or 15, **characterized in that** the cylindrical portion (143) of the screw flight (132) has a width (bs) which is at least the diameter (∅_{O}) of the cutting openings (120) on the inner wall (117).

17. The cutting and separating device according to one of claims 14 to 16, **characterized in that** the sharpened cutting edge (133) is formed with a positive rake angle (γ) located between the front flank (140) and a processing plane (144) perpendicular to the screw shaft (131).

18. The cutting and separating device according to one of claims 14 to 17, **characterized in that** a groove (145) is formed at a distal end (142) of the front flank (140), wherein an outer contour (146) of the groove (145) intersects the cylindrical portion (143).

19. The cutting and separating device according to one of claims 14 to 18, **characterized in that** a radius or a bevel (147) is arranged between the cylindrical portion (143) and the rear flank (141).

## Revendications

1. Tambour de broyage (110) pour un dispositif de coupe et de séparation, une ouverture d'entrée (113) étant formée sur la première section d'extrémité de celui-ci(112) et une ouverture de sortie (115) sur la seconde section d'extrémité de celui-ci (114), dans lequel, une pluralité d'ouvertures de coupe (120) sont agencées dans une section de boîtier de pression (116) du tambour de broyage (110), qui traversent la section de boîtier de pression (116) en continu d'une paroi interne (117) à une paroi externe (118), dans lequel chaque ouverture de coupe (120) présente un bord d'ouverture de coupe (122a) faisant face à l'ouverture de sortie (115) sur la paroi interne (117) et un bord d'ouverture de rétraction (122b) faisant face à l'ouverture d'entrée (113),
**caractérisé en ce que,**
entre le bord d'ouverture de coupe (122a) et le bord d'ouverture de rétraction (122b) se trouve un canal d'alimentation abaissé (100) par rapport à la paroi interne (117).

2. Tambour de broyage (110) selon la revendication 1, **caractérisé en ce que** le canal d'alimentation (100) est aligné axialement parallèlement à un axe longitudinal de tambour (111) de la section de boîtier de pression (116).

3. Tambour de broyage (110) selon la revendication 1 ou 2, **caractérisé en ce que** le canal d'alimentation (100) présente une longueur axiale (x_{z}) qui correspond à 5 % à 20 % du diamètre (∅_{O}) formé sur la paroi interne (117) des ouvertures de coupe (120) .

4. Tambour de broyage (110) selon l'une quelconque des revendications 1 à 3, **caractérisé en ce que** le canal d'alimentation (100) présente une profondeur (t_{z}) comprise entre 0,5 mm et 4,0 mm par rapport à la paroi interne (117).

5. Tambour de broyage (110) selon l'une des revendications 1 à 4, **caractérisé en ce que** le canal d'alimentation (100) présente une largeur maximale (y_{z}) dans la direction circonférentielle qui correspond au diamètre (∅ₒ) formé sur la paroi interne (117) des ouvertures de coupe (120).

6. Tambour de broyage (110) selon l'une quelconque des revendications 1 à 5, **caractérisé en ce que** le canal d'alimentation (100) est élargi coniquement depuis le bord d'ouverture de coupe (122a) en direction du bord d'ouverture de réfraction (122b).

7. Tambour de broyage (110) selon l'une des revendications 1 à 6, **caractérisé en ce que** le canal d'alimentation (100), partant d'un niveau de la paroi interne (117) en direction d'un axe de trou (121) de l'ouverture de coupe (120) associée, descend obliquement au moyen d'un chanfrein d'entrée (101).

8. Tambour de broyage (110) selon l'une des revendications 1 à 7, **caractérisé en ce que** les ouvertures de coupe (120) sont alignées avec des axes de trou (121) inclinés d'un angle (α) par rapport à la paroi interne (117).

9. Tambour de broyage (110) selon la revendication 8, **caractérisé en ce que** l'angle (α) est compris entre 60° et 88°, préférentiellement entre 65° à 85°, et tout particulièrement entre 70 à 80°.

10. Tambour de broyage (110) selon la revendication 8 ou 9, **caractérisé en ce que** l'angle (α) est disposé du côté de l'ouverture de coupe (120) opposé à l'ouverture d'entrée (113) entre son axe de trou (121) et la paroi interne (117).

11. Tambour de broyage (110) selon l'une des revendications 8 à 10, **caractérisé en ce que** l'axe de trou (121) coupe l'axe longitudinal du tambour (111) traversant la section de boîtier de pression (116) dans la direction radiale.

12. Tambour de broyage (110) selon l'une quelconque des revendications 8 à 11, **caractérisé en ce que** les axes de trou (121) sont alignés de sorte que le bord d'ouverture de coupe (122a) est formé avec l'angle (α).

13. Tambour de broyage (110) selon l'une des revendications 1 à 12, **caractérisé en ce que** les bords d'ouverture (122, 122a, 122b) d'ouvertures de coupe (120) adjacentes sont alignés pour se chevaucher dans la direction axiale et/ou dans la direction circonférentielle.

14. Dispositif de coupe et de séparation avec un tambour de broyage (110) selon l'une des revendications 1 à 13, **caractérisé en ce qu'**une vis sans fin (130) est montée de manière rotative dans le tambour de broyage (110), comprenant un arbre à vis sans fin (131) avec au moins un pas de vis (132) en spirale qui, en position de montage, présente un bord d'attaque (140) pour le transport par poussée d'un aliment, un bord de fuite (141) disposé sur le côté opposé et présente à son extrémité distale (142) entre le bord d'attaque (140) et le bord de fuite (141) une section cylindrique (143) qui est formée avec un bord de coupe (133) aiguisé dans la zone de transition vers le bord d'attaque (140) du pas de vis (132).

15. Dispositif de coupe et de séparation selon la revendication 14, **caractérisé en ce que** le bord de coupe (133) aiguisé est formé sur une section (134) de la vis sans fin (130) recouvrant les ouvertures de coupe (120).

16. Dispositif de coupe et de séparation selon la revendication 14 ou 15, **caractérisé en ce que** la section cylindrique (143) du pas de vis (132) présente une largeur (bₛ) qui correspond au moins au diamètre (∅ₒ) des ouvertures de coupe (120) sur la paroi interne (117).

17. Dispositif de coupe et de séparation selon l'une des revendications 14 à 16, **caractérisé en ce que** le bord de coupe (133) aiguisé est formé avec un angle de coupe positif (γ) disposé entre le bord d'attaque (140) et un plan d'usinage (144) orienté perpendiculairement à l'arbre de vis (131).

18. Dispositif de coupe et de séparation selon l'une des revendications 14 à 17, **caractérisé en ce qu'**une rainure (145) est introduite dans l'extrémité distale (142) du bord d'attaque (140), dont le contour extérieur (146) découpe la section cylindrique (143).

19. Dispositif de coupe et de séparation selon l'une des revendications 14 à 18, **caractérisé en ce qu'**un rayon ou un chanfrein (147) est disposé entre la section cylindrique (143) et le bord de fuite (141).
